(19) Europäisches Patentamt
European Patent Office
Office européen des brevets

(11) EP 2 793 431 B1

(12) # FASCICULE DE BREVET EUROPEEN

(45) Date de publication et mention de la délivrance du brevet:
**04.03.2020 Bulletin 2020/10**

(51) Int Cl.:
***H04L 12/931*** *(2013.01)* ***H04L 12/46*** *(2006.01)*
***H04L 12/40*** *(2006.01)*

(21) Numéro de dépôt: **14165130.7**

(22) Date de dépôt: **17.04.2014**

(54) **Méthode distribuée d'acquisition de données dans un réseau afdx**

Verteiltes Verfahren zur Datenerfassung in einem AFDX Netzwerk

Distributed method for data acquisition in an AFDX network

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.04.2013 FR 1353573**

(43) Date de publication de la demande:
**22.10.2014 Bulletin 2014/43**

(73) Titulaire: **AIRBUS OPERATIONS (S.A.S)**
**31060 Toulouse (FR)**

(72) Inventeurs:
- **Lopez, Juan**
**31330 Grenade (FR)**
- **Claudel, Emilie**
**31170 Tournefeuille (FR)**

(74) Mandataire: **Sarraméa, Claude**
**Airbus Operations (S.A.S)**
**XIF - M0101/1**
**316, route de Bayonne**
**31060 Toulouse Cedex (FR)**

(56) Documents cités:
**EP-A1- 2 249 520** **FR-A1- 2 832 011**
**US-A1- 2008 043 768** **US-A1- 2008 165 705**

- **IAN LAND AND JEFF ELLIOTT: "Architecting ARINC 664, Part 7 (AFDX) Solutions", APPLICATION NOTE: VIRTEX-4 AND VIRTEX-5 FPGAS, , no. version 1.0.1 22 mai 2009 (2009-05-22), pages 1-25, XP007918728, Extrait de l'Internet: URL:http://www.xilinx.com/support/documentation/application_notes/xapp1130.pdf**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 793 431 B1

## Description

## DOMAINE TECHNIQUE

La présente invention concerne le domaine des systèmes de télécommunication avionique et plus particulièrement des réseaux avioniques de type AFDX (*Avionics Full DupleX*).

## ÉTAT DE LA TECHNIQUE ANTÉRIEURE

Les systèmes de télécommunication avionique récents utilisent généralement des réseaux AFDX ((*Avionics Full DupleX*).

On rappelle que le réseau AFDX, développé pour les besoins de l'aéronautique est basé sur un réseau Ethernet commuté. Dans un réseau Ethernet commuté, chaque terminal, source ou destinataire, est relié individuellement à un commutateur de trames et les commutateurs sont reliés entre eux par des liaisons physiques. Chaque commutateur possède une pluralité de ports physiques connectés aux ports physiques d'autres commutateurs ou de terminaux. Le réseau AFDX fait appel à la notion de lien virtuel défini comme un chemin orienté de niveau 2 à travers le réseau, issu d'un terminal source et desservant un ou plusieurs destinataires. Un terminal destinataire d'un lien virtuel est aussi dit abonné à ce lien.

Le réseau AFDX offre une garantie de service sur chaque lien virtuel. Plus précisément, à chaque lien virtuel est associé un intervalle minimal entre trames ainsi qu'une taille maximale de trame. Sous réserve du respect de ces contraintes, un temps maximal d'acheminement des trames, ou borne de latence, est garanti pour chaque lien virtuel.

On trouvera une description détaillée du réseau AFDX dans le document intitulé « AFDX protocol tutorial » disponible sur le site www.condoreng.com ainsi que dans la demande de brevet FR-A-2832011 déposée au nom de la demanderesse. Ses principales caractéristiques seront simplement rappelées ci-après.

Comme déjà mentionné, le réseau AFDX est basé sur un réseau Ethernet commuté, de type full-duplex. Le réseau AFDX est avant tout déterministe, au sens où les liens virtuels ont des caractéristiques garanties en termes de borne de latence, de ségrégation physique de flux et de bande passante. Chaque lien virtuel dispose pour ce faire d'un chemin réservé de bout en bout, d'une fragmentation temporelle en intervalles de transmission (dénommés BAG pour *Bandwidth Allocation Gap*) et d'une taille de trame maximale dite MFS (*Maximum Frame Size*). Les trames sont envoyées en début de chaque intervalle de transmission avec une tolérance de gigue prédéterminée. Les données sont transmises sous forme de paquets IP encapsulés dans des trames Ethernet. A la différence de la commutation Ethernet classique (utilisant l'adresse Ethernet du destinataire), la commutation de trames sur un réseau AFDX utilise un identificateur de lien virtuel inclus dans l'entête de trame. Lorsqu'un commutateur reçoit sur l'un de ses ports d'entrée une trame, il lit l'identificateur de lien virtuel et détermine à partir de sa table de commutation le ou les port(s) de sortie sur le(s)quel(s) elle doit être transmise.

Chaque lien virtuel est mono-directionnel. Il ne peut être issu que d'un terminal source à la fois mais peut aboutir à plusieurs destinataires. On distingue les liens virtuels en mode point à point (ou unicast), ne desservant qu'un seul destinataire, des liens virtuels en mode multipoint (ou multicast) qui en desservent plusieurs.

Ainsi, de manière générale, un lien virtuel peut être caractérisé par :

- un identifiant unique $VL_{Id}$ ;
- un terminal source (ou émetteur) unique ;
- un terminal destinataire ou plusieurs terminaux destinataires (récepteurs) ;
- une bande passante allouée (BAG) et une taille maximale de trames (MFS) sur ce lien ;
- un routage dans le réseau, c'est-à-dire une liste de commutateurs traversés.

Le routage d'un lien virtuel à travers un commutateur se traduit par une entrée stockée dans la table de commutation de ce commutateur, cette entrée comprenant l'identifiant du lien virtuel, $VL_{Id}$, ainsi que les numéros des ports d'entrée et de sortie empruntés par le lien.

La Fig. 1 représente schématiquement un exemple de réseau AFDX comprenant des terminaux $T_1$ à $T_6$ et des commutateurs de trames $SW_1$, $SW_2$. On voit par exemple que le lien virtuel $VL_3$ reliant le terminal $T_3$ à $T_2$ est de type point à point alors que les liens virtuels $VL_2$ desservant $T_2$ et $T_3$, et $VL_1$ desservant $T_3$ à $T_5$ sont de type multipoint.

La Fig. 2 représente schématiquement l'architecture interne d'un commutateur AFDX, dit de seconde génération.

Le commutateur AFDX 100, comprend un module de commutation proprement dit, 110. Ce module de commutation lit les entêtes des trames AFDX arrivant sur les différents ports et en extrait les identifiants de liens virtuels correspondants.

Pour chaque trame incidente, le module de commutation 110 extrait de l'entête de la trame, l'identifiant de lien virtuel $VL_{Id}$, consulte la table de commutation 120, vérifie que le port d'entrée correspond bien au lien virtuel et obtient le numéro du port de sortie (ou les numéros de ports de sortie pour un lien virtuel multicast). Le module de commutation 110 commute alors la trame sur le port de sortie ainsi obtenu.

En pratique, les ports d'entrée et de sortie sont reliés à des buffers et la commutation se fait en lisant une trame d'un buffer d'entrée et en l'écrivant dans un buffer de sortie.

Le module de commutation rend compte au module de surveillance 130 des opérations qu'il effectue et, le cas échéant, des erreurs survenues. Par exemple, le module de surveillance tient à jour des registres indiquant le nombre de trames commutées sur chaque lien virtuel. Il enregistre également les erreurs survenues sur les trames conduisant à leur rejet par le module de commutation, par exemple trames présentant un CRC erroné ou transmises par erreur (identifiant de lien virtuel manquant dans la table), trames arrivées sur un mauvais port d'entrée (port d'entrée ne correspondant pas à l'identifiant de lien virtuel), dépassement de la bande passante (BAG) ou de la taille de trame maximale (MFS) de consigne sur le lien virtuel, etc. De manière générale, le module de surveillance garde une trace en mémoire locale de l'historique des événements intervenus dans le module de commutation.

Enfin, le commutateur 100 comprend une interface réseau 150, relié par un bus interne au module de commutation 110, à la table de configuration 120, au module de surveillance 130. Cette interface réseau est, selon la terminologie utilisée dans la norme Arinc 664, le système d'extrémité (End System) propre du commutateur, au même titre que le système d'extrémité d'un terminal quelconque abonné au réseau. Ainsi, le commutateur AFDX dispose-t-il de sa propre adresse MAC. Il peut donc agir en tant que source ou destinataire d'un lien virtuel et notamment recevoir des trames qui lui sont destinées.

Par exemple, lorsque la table de commutation doit être mise à jour, les informations de routage décrivant les nouveaux liens virtuels (identifiants, No de port d'entrée, No de port de sortie) sont acheminées par des trames sur un lien virtuel aboutissant à l'interface réseau 150 du commutateur. Le module de commutation identifie, grâce à l'identifiant du lien virtuel en question que ces trames sont destinées au commutateur lui-même et non pas destinées à être commutées. Il peut alors mettre à jour la table de commutation 120 à l'aide des informations.

Outre son interface réseau, le module de contrôle peut héberger des applications de test du commutateur, par exemple un agent SNMP (*Simple Network Management Protocol*). Ces applications peuvent dialoguer avec des applications distantes, notamment celles chargées de la gestion du réseau ou NMF (*Network Management Function*) via l'interface réseau, chaque application disposant en outre de son propre port logique (port UDP par exemple).

Par ailleurs, les données avioniques, et tout particulièrement les paramètres avion (notamment ceux relatifs à la trajectoire, l'attitude, la vitesse de l'avion) et moteurs (vitesse de rotation, température, etc.) transitant sur les liens virtuels doivent pouvoir être contrôlées et enregistrées en temps réel pour des raisons de sûreté et de maintenance. De manière générale, on appellera donnée avionique toute donnée transmise ou reçue par un équipement participant ou aidant au pilotage d'un aéronef.

Sur les aéronefs de conception récente, l'acquisition des données avioniques est réalisée au moyen d'une unité d'acquisition centralisée dénommée CDAU (*Centralized Data Acquisition Unit*) ou bien par un logiciel hébergé dans un module avionique dédié CDAM (*Centralized Data Acquisition Module*).

Cette unité d'acquisition centralisée permet, entre autres, d'accéder aux valeurs enregistrées des paramètres avion et moteurs, pour générer des rapports de statuts à des fins de maintenance ou d'optimisation de l'opérabilité de l'aéronef.

La Fig. 3 représente un réseau AFDX auquel est reliée une unité d'acquisition centralisée de données.

Plus précisément, cette unité d'acquisition centralisée CDAU/CDAM est reliée par des liaisons physiques aux commutateurs du réseau AFDX, dénommés ci-après commutateurs d'acquisition, auxquels sont connectés directement des terminaux abonnés (commutateurs $SW_1$,$SW_2$,$SW_3$ sur la figure).

L'unité d'acquisition centralisée CDAU/CDAM peut requérir que des données avioniques qui lui soient transmises par l'un des commutateurs d'acquisition, autrement dit que des trames de certains liens virtuels lui soient retransmises.

Dans ce cas, la trame contenant des données avioniques est non seulement commutée par le commutateur d'acquisition, au même titre qu'un commutateur AFDX classique, mais également recopiée et transmise à l'unité d'acquisition centralisée. La trame peut être transmise, soit telle quelle, c'est-à-dire sous forme de trame AFDX sur un lien virtuel reliant le commutateur à l'unité d'acquisition centralisée (l'adresse Ethernet de destination comprend alors une constante de 24 bits et l'identifiant de lien virtuel sur 16 bits), soit sous forme de simple trame Ethernet (auquel cas l'adresse Ethernet de destination est simplement celle de l'unité d'acquisition centralisée). Dans le premier cas, cela revient à dupliquer le lien virtuel passant par le commutateur par un lien virtuel ayant pour destination l'unité d'acquisition centralisée ou, de manière équivalente, à ajouter à ce lien virtuel, une branche ayant cette unité pour destinataire.

Dans l'exemple représenté, les commutateurs d'acquisition $SW_1$,$SW_2$,$SW_3$ sont reliés à l'unité d'acquisition centralisée de données CDAU/CDAM au moyen de liaisons physiques et les trames de données avioniques lui sont transmises via des liens virtuels. Plus précisément, le lien virtuel $VL_1$ partant du terminal $T_1$ et passant par les commutateurs $SW_1$,$SW_4$,$SW_6$ est dupliqué par le commutateur $SW_1$ en un lien virtuel $VL_1^d$, le virtuel $VL_2$ partant du terminal $T_2$ et passant par les commutateurs $SW_2$,$SW_3$,$SW_5$ est dupliqué par le commutateur $SW_2$ en un lien virtuel $VL_2^d$ et le lien virtuel $VL_3$ partant du terminal $T_3$ et passant par les commutateurs $SW_3$, $SW_6$ est dupliqué par le commutateur $SW_3$ en un lien

virtuel $VL_3^d$. On remarquera que les liens virtuels $VL_1^d$, $VL_2^d$ et $VL_3^d$ aboutissent à des interfaces réseau (E/S) différentes de l'unité d'acquisition CDAU/CDAM.

L'unité d'acquisition centralisée est pourvue d'autant d'interfaces réseau que de commutateurs AFDX auxquels elle est reliée. En effet, il ne serait pas envisageable pour des raisons de limitation de bande passante de connecter cette unité à un seul commutateur du réseau (et donc de ne prévoir qu'une seule interface réseau sur l'unité d'acquisition), car le trafic sur les liens virtuels dupliqués engorgerait alors le réseau.

Ensuite, l'unité d'acquisition centralisée étant un équipement commun à l'ensemble du réseau, on comprend qu'elle doive respecter des contraintes de protection particulièrement élevée de manière à éviter qu'une panne de l'unité n'affecte le bon fonctionnement de l'ensemble des commutateurs du réseau AFDX.

En outre, tout changement de configuration du réseau (ajout ou suppression d'un commutateur d'acquisition par exemple), nécessite de modifier l'architecture matérielle de l'unité d'acquisition centralisée et de la certifier à nouveau.

Enfin, la mise en œuvre de la méthode d'acquisition centralisée requiert de dédier un port de chaque commutateur d'acquisition à une liaison avec l'unité d'acquisition, ce qui limite les possibilités d'interconnexion du réseau.

On comprend par conséquent que l'implémentation actuelle de l'acquisition de données transitant sur le réseau est complexe et coûteuse.

Le document US 2008/043768 A1 décrit un commutateur d'un réseau Ethernet commuté full-duplex déterministe AFDX conforme à l'art antérieur.

Le document US 2008/165705 A1 décrit un procédé de transmission de trames dans un réseau Ethernet, dans lequel un commutateur comprend une table de management comportant une adresse MAC d'un commutateur voisin.

Un but de la présente invention est de proposer une méthode d'acquisition de données qui soit plus simple et plus flexible que celle utilisée dans l'art antérieur.

## EXPOSÉ DE L'INVENTION

La présente invention est définie par un commutateur de trames d'un réseau AFDX selon la revendication 1.

Un tel commutateur permet d'effectuer une acquisition des données de manière distribuée sur le réseau, et de gérer celle-ci de manière flexible, au niveau applicatif, sans avoir à reconfigurer, pour chaque modification du réseau, les interfaces d'une unité d'acquisition centralisée et sans avoir à monopoliser des ports de commutateurs AFDX pour cette fonction.

Avantageusement, ladite application d'acquisition de données stocke localement au moins ladite partie des données de la trame avec un identifiant du lien virtuel prédéterminé à laquelle celle-ci appartient.

Alternativement, ladite application d'acquisition de données récupère, à partir d'un identifiant du lien virtuel prédéterminé, d'une adresse IP, d'un port UDP et d'un identifiant de segment dans un paquet UDP, ladite partie des données de la trame, et stocke localement ladite partie des données de la trame, avec ledit identifiant du lien virtuel prédéterminé, ladite adresse IP, ledit port UDP et ledit identifiant de segment.

Dans tous les cas, ladite application d'acquisition de données peut compresser ladite partie des données de la trame avant de la stocker localement.

Ladite requête d'acquisition de données peut comprendre en outre une adresse IP, un port UDP et un identifiant de segment dans un paquet UDP.

L'application d'acquisition de données peut aussi être adaptée à recevoir une requête de transfert de données d'un serveur distant, la requête comprenant au moins un identifiant de lien virtuel dont les données sont à transférer, ladite application transférant lesdites données dans des trames Ethernet via une passerelle applicative hébergée par le commutateur.

Alternativement, l'application d'acquisition de données peut être adaptée à recevoir une requête de transfert de données d'un serveur distant, la requête comprenant au moins un identifiant de lien virtuel dont les données sont à transférer, ladite application transférant lesdites données dans des trames AFDX via un lien virtuel reliant le commutateur de trames audit serveur distant.

L'invention concerne également un réseau AFDX comprenant au moins un commutateur de trames tel que défini précédemment.

Le réseau AFDX peut en outre comprendre un serveur abonné audit réseau, le serveur étant adapté à transmettre au moins une requête d'acquisition de données à chaque commutateur de ladite pluralité, une requête d'acquisition de données étant paramétrée par au moins un identifiant de lien virtuel passant par ledit commutateur.

Ladite requête d'acquisition de donnée peut en outre être paramétrée par une adresse IP, un port UDP et un segment dans un paquet UDP.

Le serveur abonné audit réseau peut en outre être adapté à transmettre des requêtes de transfert de données à chaque commutateur de ladite pluralité, une requête de transfert de données étant paramétrée par au moins un identifiant de lien virtuel dont les données sont à transférer.

Ladite requête de transfert de données peut également être paramétrée par une adresse IP, un port UDP et un identifiant de segment dans un paquet UDP.

Enfin, la présente invention concerne également un aéronef comprenant un réseau AFDX comme défini précédemment.

## BRÈVE DESCRIPTION DES DESSINS

D'autres caractéristiques et avantages de l'invention apparaîtront à la lecture de modes de réalisation préférentiels de l'invention faite en référence aux figures jointes parmi lesquelles :

La Fig. 1 représente un exemple de réseau AFDX connu de l'état de la technique ;
La Fig. 2 représente de manière schématique l'architecture interne d'un commutateur AFDX;
La Fig. 3 représente de manière schématique un réseau AFDX auquel est abonnée une unité d'acquisition centralisée de données ;
La Fig. 4 représente l'implémentation de l'application d'acquisition de données au sein du module de contrôle d'un commutateur AFDX selon un mode de réalisation de l'invention ;
La Fig. 5 représente un exemple de table de commutation utilisée par un commutateur AFDX selon un mode de réalisation de l'invention.

## EXPOSÉ DÉTAILLÉ DE MODES DE RÉALISATION PARTICULIERS

L'idée à la base de l'invention est d'implémenter une acquisition décentralisée (ou distribuée) des données au niveau de chaque commutateur du réseau AFDX et plus précisément d'héberger une application d'acquisition de données au sein de chaque commutateur.

On considère à nouveau un réseau AFDX comportant une pluralité de commutateurs, chaque commutateur possédant l'architecture interne décrite en relation avec la Fig. 2. Une pluralité de terminaux sont abonnés à ce réseau et échangent des trames AFDX par le moyen de liens virtuels, de manière connue en soi.

La Fig. 4 représente à l'aide d'une pile protocole, la manière dont est implémentée l'application d'acquisition de données au sein de l'interface réseau (End System E/S) du commutateur.

La couche la plus basse de protocole correspond à la couche physique PHY de l'interface réseau. Elle est surmontée par la couche liaison AFDX. En réception, celle-ci est adaptée à recevoir les trames AFDX via le bus interne du commutateur. En émission, elle régule la transmission des trames AFDX sur le réseau de sorte à respecter les contraintes de bande passante pour les différents liens virtuels La troisième couche correspond à la couche IP (*Internet Protocol*) de l'interface réseau. En réception, elle est responsable de la vérification CRC (*Cyclic Redundancy Check*) des datagrammes IP (IP checksum) et, le cas échéant, de la défragmentation pour reconstituer des paquets UDP (*User Datagram Protocol*). En émission, elle est chargée de la fragmentation des paquets UDP en datagrammes IP, du calcul et de la concaténation des CRC aux datagrammes, puis de la concaténation de l'entête de trame Ethernet (comprenant l'identifiant de lien virtuel).

La quatrième couche correspond à la couche UDP de l'interface réseau. Cette couche fournit des ports logiques de communication aux applications hébergées par le commutateur.

On a représenté au dessus de la couche transport (couche UDP) des exemples d'applications pouvant être hébergées par le commutateur. Les ports logiques fournis par la couche UDP sous-jacente permettent à ces applications de communiquer avec des applications distantes via le réseau AFDX.

Ainsi, un agent SNMP (*Simple Network Management Protocol*) peut dialoguer avec le superviseur de réseau et fournir des données relatives à la gestion du commutateur. Un module Arinc 615A permet de télécharger de nouvelles données au sein du commutateur, par exemple une nouvelle table de commutation, via le réseau AFDX.

Enfin, selon un mode de réalisation de l'invention, une application désignée par DDA (pour *Distributed Dota Acquisition*) est chargée d'acquérir les données qu'elle reçoit sur certains liens virtuels. Cette application peut notamment dialoguer avec un serveur distant chargé de la centralisation des données ainsi acquises, de leur stockage de masse et, le cas échéant, de la présentation de ces données au moyen d'une interface HMI. L'application DDA peut également recevoir des requêtes de ce serveur pour acquérir ou bien au contraire de cesser d'acquérir des données sur un lien virtuel données. Elle gère ainsi une liste de liens virtuels $VLS^a = \{VL_1^a, \ldots VL_N^a\}$ passant par le commutateur et dont elle doit acquérir les données.

La Fig. 5 représente un exemple de table de commutation utilisée par un commutateur AFDX selon un mode de réalisation de l'invention.

Cette table contient la liste de liens virtuels que doit commuter le commutateur AFDX. Cette liste est composée de deux sous-listes : une première sous-liste $VLS^a$ de liens virtuels dont les données sont à acquérir et une deuxième sous-liste $VLS^{na}$ de liens virtuels dont les données ne sont pas à acquérir. Par exemple, la première liste peut être constituée par des liens virtuels transportant des données avioniques au sens défini plus haut.

On voit qu'à chaque lien virtuel $VL_1^{na}, \ldots VL_P^{na}$ de la sous-liste $VLS^{na}$, correspond une entrée dans la table de commutation. A cette entrée sont stockés le port d'entrée et le ou les port(s) de sortie du commutateur empruntés par le lien virtuel. On comprendra que lorsque plusieurs ports de sortie sont stockés à une entrée de la table, le lien virtuel est de type multicast (ou multipoint).

De manière similaire, à chaque lien virtuel $VL_1^a, \ldots VL_N^a$ de la sous-liste $VLS^a$ correspond une entrée de la table de commutation à laquelle sont stockés le port d'entrée et le ou les port(s) de sortie du commutateur empruntés par le lien virtuel. Toutefois, à la différence du cas précédent, chaque entrée comporte en outre, à la suite du ou des port(s) de sortie, identifiant *Id*(*E*/*S*) représentant le bus interne ou, de manière équivalente, l'adresse MAC du commutateur.

Ainsi, une trame reçue sur un lien virtuel $VL_n^a$ de $VLS^a$, est non seulement commutée vers le/les port(s) de sortie figurant dans la table, mais aussi transmise via le bus interne à l'interface réseau (E/S) du commutateur.

A l'instar de l'interface réseau de n'importe quel abonné, l'interface réseau du commutateur rejette les trames appartenant à des liens virtuels dont elle n'est pas destinataire. Pour ce faire, elle dispose d'une table de filtrage comprenant les identifiants des liens virtuels dont elle est effectivement destinataire. Cette table contient notamment les identifiants des liens virtuels dont les données sont à acquérir, à savoir $VL_1^a_Id,...,VL_N^a_Id$, comme expliqué plus loin.

En outre, le module de commutation rejette toute trame dont le lien virtuel n'est pas répertorié dans la table de commutation ou dont le port d'entrée n'est pas celui indiqué dans la table pour le lien virtuel en question. On s'assure ainsi que seuls les liens virtuels passant par le bon port d'entrée du commutateur et appartenant à la sous-liste $VLS^a$ sont dupliqués vers l'interface réseau du commutateur.

Lorsque l'interface réseau reçoit une trame dont le lien virtuel a pour destinataire le commutateur lui-même (un tel lien virtuel est par exemple utilisé pour une mise à jour de la table de commutation), celui-ci le transmet, à travers la pile de protocole, à l'adresse IP et au port UDP de l'application spécifiés dans la trame. Lorsque l'adresse IP et/ou le port UDP spécifiés dans la trame ne sont pas reconnus par l'interface réseau, celle-ci suppose qu'il s'agit d'une trame à acquérir et la transmet au port UDP de l'application DDA chargée de l'acquisition de la trame et de son traitement éventuel.

Selon une variante, l'interface réseau opère en mode promiscuité (promiscuous mode), c'est-à-dire n'effectue pas de filtrage de trames à partir des identifiants de liens virtuels, le module de commutation continuant cependant à assurer la réjection de toute trame dont le lien virtuel n'est pas répertorié dans la table de commutation, comme expliqué précédemment. Dans ce cas, le filtrage est seulement assuré par le module de commutation. Les trames reçues par l'interface réseau sont transmises à l'adresse IP et au port UDP spécifiés dans la trame comme indiqué précédemment. Là encore, si l'adresse IP et/ou le port UDP ne sont pas reconnus, la trame est transmise à l'application DDA.

Sur requête du serveur distant chargé de la centralisation des données acquises, l'application DDA récupère et stocke au moins une partie des données contenues dans les trames appartenant à un lien virtuel $VL_n^a$ et les stocke localement dans un buffer pour retransmission ultérieure.

Selon une variante, les données acquises sont stockées localement dans une mémoire. Dans ce cas, les données acquises sont avantageusement compressées à l'aide d'un algorithme de compression de données, connu en soi, avant de les stocker. Le stockage peut en outre être subordonné à la survenance d'un événement particulier ou à la requête du serveur distant chargé de la centralisation des données acquises.

L'application DDA peut recevoir du serveur distant une requête donnant une liste des identifiants liens virtuels dont les données sont à acquérir et met à jour la table de commutation en ajoutant pour chacun des liens virtuels de la liste, l'identifiant de l'adresse MAC du commutateur. En outre, les identifiants des liens virtuels en question sont également ajoutés à la table de filtrage de l'interface réseau du commutateur.

Alternativement, le serveur distant peut envoyer une requête spécifique pour l'acquisition de chaque lien virtuel, commandant une acquisition ou au contraire l'arrêt de cette acquisition sur ce lien. On comprend que la mise à jour de la table de commutation et de la table de filtrage est alors effectuée au coup par coup.

Une requête d'acquisition peut indiquer pour un lien virtuel quelconque, l'adresse IP, le port UDP, voire le segment du champ « données » du paquet, correspondant aux données à acquérir. Le segment peut être identifié par son adresse de début et sa longueur. On comprend ainsi que l'application DDA peut ainsi extraire sélectivement les données d'intérêt à l'aide d'une opération de filtrage contrôlé par le serveur distant. La quantité de données à stocker localement et à retransmettre au serveur distant s'en trouve réduite d'autant.

Le format d'une requête d'acquisition transmise au commutateur pourra avoir la forme suivante : *acquisition_request*(*VL_Id*,[*IP_address*],[*UDP_port*], [*start_bit*,*length*]) où les paramètres entre crochets sont facultatifs. Les données acquises sont stockées avec l'identifiant du lien virtuel et, le cas échéant, l'adresse IP, le port UDP et l'identifiant de segment dans le paquet UDP.

Les données stockées peuvent être transmises, soit dans des trames AFDX, via un lien virtuel reliant le commutateur au serveur, soit dans des simples trames Ethernet (donc sans réservation de bande passante) via une passerelle applicative hébergée par le commutateur. Dans le premier cas, la bande passante allouée (BAG) sur le lien virtuel sera choisie suffisamment faible pour ne pas avoir à restreindre les bandes passantes allouées aux autres liens virtuels. Dans le second cas, les trames Ethernet sont transmises dans la bande passante non allouée, selon une stratégie de type Best Effort.

La transmission au serveur des données acquises peut se faire au fil de l'eau, dès lors que les ressources de transmission sont disponibles (ressources garanties dans le cas d'un lien virtuel). Ce mode d'opération ne nécessite qu'un stockage des données dans un buffer.

Alternativement, les données acquises sont stockées (après éventuellement compression) dans une mémoire du commutateur et ne sont transmises au serveur que sur une requête de transmission de ce dernier.

Dans ce cas, la requête de transmission du serveur contient l'identifiant du lien virtuel (et le cas échéant, l'adresse IP, le port UDP et l'identifiant de segment) pour lesquels les données stockées sont à transférer.

En règle générale, on préférera toutefois une transmission au fil de l'eau afin de ne pas obérer les ressources en mémoire du commutateur.

Comme dans l'art antérieur décrit dans la partie introductive, pour acquérir des données sur un lien virtuel, le serveur pourra simplement requérir une acquisition au premier commutateur, ou plus généralement la requérir à un commutateur quelconque traversé par ce lien. Toutefois, dans le cas présent, étant donné qu'il n'est pas nécessaire de réserver des ports physiques dédiés à l'acquisition et de prévoir des liaisons physiques directes avec le serveur, pourra-t-on dans certains cas effectuer une acquisition de données en plusieurs commutateurs sur ce lien, notamment pour des raisons de test.

On comprend que, selon l'invention, la fonction d'acquisition des données est décentralisée dans les différents commutateurs. La suppression ou l'ajout d'un commutateur ne nécessite pas de reconfiguration matérielle mais simplement de mettre à jour des tables de commutation dans le commutateur concerné et, le cas échéant, le logiciel du serveur distant.

## Revendications

1. Commutateur de trames d'un réseau Ethernet commuté full-duplex déterministe AFDX comprenant une pluralité de ports d'entrée et une pluralité de ports de sortie, une table de commutation (120) comprenant une pluralité d'entrées, chaque entrée correspondant à un lien virtuel passant par le commutateur et fournissant, pour un identifiant de lien virtuel, le port d'entrée et le/les port(s) de sortie emprunté par ce lien virtuel, un module de commutation (110) adapté à commuter toute trame arrivant sur un port d'entrée du commutateur, à lire un identifiant de lien virtuel contenu dans un entête de la trame et à commuter celle-ci vers le/les port(s) de sortie donné(s) par l'entrée de la table de commutation correspondant à ce lien virtuel, une interface réseau (150) adaptée à recevoir des trames destinées au commutateur, ledit commutateur étant tel que :

   - au moins une entrée de la table de commutation, correspondant à un lien virtuel prédéterminé, comprend en outre un identifiant de l'adresse MAC du commutateur;
   - le module de commutation transmet toute trame reçue sur le lien virtuel prédéterminé à l'interface réseau du commutateur ;
   - la trame reçue sur le lien virtuel prédéterminé est transmise à une application, DDA, hébergée par le commutateur pour stocker localement au moins une partie des données de cette trame,

   **caractérisé en ce que** l'application d'acquisition de données est adaptée à recevoir une requête d'acquisition de données d'un serveur distant, la requête donnant au moins un lien virtuel pour lequel les données sont à acquérir, ladite application mettant à jour la table de commutation en ajoutant pour ce lien virtuel, l'identifiant de l'adresse MAC du commutateur.

2. Commutateur de trames selon la revendication 1, **caractérisé en ce que** ladite application d'acquisition de données stocke localement au moins ladite partie des données de la trame avec un identifiant du lien virtuel prédéterminé à laquelle celle-ci appartient.

3. Commutateur de trames selon la revendication 1, **caractérisé en ce que** ladite application d'acquisition de données récupère, à partir d'un identifiant du lien virtuel prédéterminé, d'une adresse IP, d'un port UDP et d'un identifiant de segment dans un paquet UDP, ladite partie des données de la trame, et stocke localement ladite partie des données de la trame, avec ledit identifiant du lien virtuel prédéterminé, ladite adresse IP, ledit port UDP et ledit identifiant de segment.

4. Commutateur de trames selon la revendication 2 ou 3, **caractérisé en ce que** ladite application d'acquisition de données compresse ladite partie des données de la trame avant de la stocker localement.

5. Commutateur de trames selon la revendication 1, **caractérisé en ce que** ladite requête d'acquisition de données comprend en outre une adresse IP, un port UDP et un identifiant de segment dans un paquet UDP.

6. Commutateur de trames selon la revendication 1, **caractérisé en ce que** l'application d'acquisition de données est adaptée à recevoir une requête de transfert de données d'un serveur distant, la requête comprenant au moins un identifiant de lien virtuel dont les données sont à transférer, ladite application transférant lesdites données dans des trames Ethernet via une passerelle applicative hébergée par le commutateur.

7. Commutateur de trames selon la revendication 1, **caractérisé en ce que** l'application d'acquisition de données est adaptée à recevoir une requête de transfert de données d'un serveur distant, la requête comprenant au moins un identifiant de lien virtuel dont les données sont à transférer, ladite application transférant lesdites données dans des trames AFDX via un lien virtuel reliant le commutateur de trames audit server distant.

**8.** Réseau Ethernet commuté full-duplex déterministe AFDX comprenant au moins un commutateur de trames selon l'une des revendications précédentes.

**9.** Réseau AFDX selon la revendication 8, **caractérisé en ce qu'**il comprend en outre un serveur abonné audit réseau, le serveur étant adapté à transmettre au moins une requête d'acquisition de données à chaque commutateur de ladite pluralité, une requête d'acquisition de données étant paramétrée par au moins un identifiant de lien virtuel passant par ledit commutateur.

**10.** Réseau AFDX selon la revendication 9, **caractérisé en ce que** ladite requête d'acquisition de donnée est paramétrée en outre par une adresse IP, un port UDP et un segment dans un paquet UDP.

**11.** Réseau AFDX selon la revendication 8, **caractérisé en ce qu'**il comprend en outre un serveur abonné audit réseau, le serveur étant adapté à transmettre des requêtes de transfert de données à chaque commutateur de ladite pluralité, une requête de transfert de données étant paramétrée par au moins un identifiant de lien virtuel dont les données sont à transférer.

**12.** Réseau AFDX selon la revendication 11, **caractérisé en ce que** ladite requête de transfert de données est paramétrée en outre par une adresse IP, un port UDP et un identifiant de segment dans un paquet UDP.

**13.** Aéronef **caractérisé en ce qu'**il comprend un réseau AFDX selon l'une des revendications 9 à 12.

## Patentansprüche

**1.** Paket-Switch eines deterministischen Vollduplex-Switched-Ethernet, AFDX, Netzwerks, welcher umfasst: mehrere Eingangsports und mehrere Ausgangsports, eine Vermittlungstabelle (120), die mehrere Einträge umfasst, wobei jeder Eintrag einer über den Switch verlaufenden virtuellen Verbindung entspricht und für eine Kennung der virtuellen Verbindung den Eingangsport und den/die Ausgangsport(s) liefert, die von dieser virtuellen Verbindung verwendet werden, ein Vermittlungsmodul (110), das dafür ausgelegt ist, jeden an einem Eingangsport des Switches ankommenden Rahmen zu vermitteln, eine Kennung der virtuellen Verbindung zu lesen, die in einem Header des Rahmens enthalten ist, und den Letzteren zu dem (den) Ausgangsport(s) zu vermitteln, der (die) durch den dieser virtuellen Verbindung entsprechenden Eintrag der Vermittlungstabelle angegeben ist (sind), und eine Netzwerkschnittstelle (150), die dafür ausgelegt ist, Rahmen zu empfangen, die für den Switch bestimmt sind, wobei der Switch so beschaffen ist, dass:

- wenigstens ein Eintrag der Vermittlungstabelle, der einer vorbestimmten virtuellen Verbindung entspricht, außerdem eine Kennung der MAC-Adresse des Switches umfasst;
- das Vermittlungsmodul jeden auf der vorbestimmten virtuellen Verbindung empfangenen Rahmen an die Netzwerkschnittstelle des Switches überträgt;
- der auf der vorbestimmten virtuellen Verbindung empfangene Rahmen an eine von dem Switch gehostete Anwendung, DDA, übertragen wird, um wenigstens einen Teil der Daten dieses Rahmens lokal zu speichern,

**dadurch gekennzeichnet, dass** die Datenerfassungsanwendung dafür ausgelegt ist, eine Datenerfassungsanforderung von einem entfernten Server zu empfangen, wobei die Anforderung wenigstens eine virtuelle Verbindung angibt, für welche die Daten zu erfassen sind, wobei die Anwendung die Vermittlungstabelle aktualisiert, indem sie für diese virtuelle Verbindung die Kennung der MAC-Adresse des Switches hinzufügt.

**2.** Paket-Switch nach Anspruch 1, **dadurch gekennzeichnet, dass** die Datenerfassungsanwendung wenigstens den Teil der Daten des Rahmens mit einer Kennung der vorbestimmten virtuellen Verbindung lokal speichert, zu dem diese gehört.

**3.** Paket-Switch nach Anspruch 1, **dadurch gekennzeichnet, dass** die Datenerfassungsanwendung aus einer Kennung der vorbestimmten virtuellen Verbindung, einer IP-Adresse, einem UDP-Port und einer Segmentkennung in einem UDP-Paket den Teil der Daten des Rahmens gewinnt und den Teil der Daten des Rahmens mit der Kennung der vorbestimmten virtuellen Verbindung, der IP-Adresse, dem UDP-Port und der Segmentkennung lokal speichert.

**4.** Paket-Switch nach Anspruch 2 oder 3, **dadurch gekennzeichnet, dass** die Datenerfassungsanwendung den Teil der Daten des Rahmens komprimiert, bevor sie ihn lokal speichert.

**5.** Paket-Switch nach Anspruch 1, **dadurch gekennzeichnet, dass** die Datenerfassungsanforderung außerdem eine IP-Adresse, einen UDP-Port und eine Segmentkennung in einem UDP-Paket umfasst.

6. Paket-Switch nach Anspruch 1, **dadurch gekennzeichnet, dass** die Datenerfassungsanwendung dafür ausgelegt ist, eine Datenübertragungsanforderung von einem entfernten Server zu empfangen, wobei die Anforderung wenigstens eine Kennung der virtuellen Verbindung umfasst, deren Daten zu übertragen sind, wobei die Anwendung die Daten in Ethernet-Rahmen über ein Anwendungs-Gateway überträgt, das von dem Switch gehostet wird.

7. Paket-Switch nach Anspruch 1, **dadurch gekennzeichnet, dass** die Datenerfassungsanwendung dafür ausgelegt ist, eine Datenübertragungsanforderung von einem entfernten Server zu empfangen, wobei die Anforderung wenigstens eine Kennung der virtuellen Verbindung umfasst, deren Daten zu übertragen sind, wobei die Anwendung die Daten in AFDX-Rahmen über eine virtuelle Verbindung überträgt, die den Paket-Switch mit dem entfernten Server verbindet.

8. Deterministisches Vollduplex-Switched-Ethernet, AFDX, Netzwerk, welches wenigstens einen Paket-Switch nach einem der vorhergehenden Ansprüche umfasst.

9. AFDX-Netzwerk nach Anspruch 8, **dadurch gekennzeichnet, dass** es außerdem einen bei dem Netzwerk angemeldeten Server umfasst, wobei der Server dafür ausgelegt ist, wenigstens eine Datenerfassungsanforderung an jeden der mehreren Switches zu übertragen, wobei eine Datenerfassungsanforderung durch wenigstens eine Kennung einer über den Switch verlaufenden virtuellen Verbindung parametriert ist.

10. AFDX-Netzwerk nach Anspruch 9, **dadurch gekennzeichnet, dass** die Datenerfassungsanforderung außerdem durch eine IP-Adresse, einen UDP-Port und ein Segment in einem UDP-Paket parametriert ist.

11. AFDX-Netzwerk nach Anspruch 8, **dadurch gekennzeichnet, dass** es außerdem einen bei dem Netzwerk angemeldeten Server umfasst, wobei der Server dafür ausgelegt ist, Datenübertragungsanforderungen an jeden der mehreren Switches zu übertragen, wobei eine Datenübertragungsanforderung durch wenigstens eine Kennung einer virtuellen Verbindung parametriert ist, deren Daten zu übertragen sind.

12. AFDX-Netzwerk nach Anspruch 11, **dadurch gekennzeichnet, dass** die Datenübertragungsanforderung außerdem durch eine IP-Adresse, einen UDP-Port und eine Kennung eines Segments in einem UDP-Paket parametriert ist.

13. Luftfahrzeug, **dadurch gekennzeichnet, dass** es ein AFDX-Netzwerk nach einem der Ansprüche 9 bis 12 umfasst.

## Claims

1. Frame switch of a deterministic full-duplex switched Ethernet AFDX network comprising a plurality of input ports and a plurality of output ports, a switching table (120) comprising a plurality of entries, each entry corresponding to a virtual link passing through the switch and providing, for a virtual link ID, the input port and the output port(s) taken by this virtual link, a switching module (110) suitable for switching any frame arriving on an input port of the switch, for reading a virtual link ID contained in a header of the frame and for switching the frame towards the output port(s) given by the entry in the switching table corresponding to this virtual link, a network interface (150) suitable for receiving frames intended for the switch, said switch being such that:

   - at least one entry of the switching table, corresponding to a predetermined virtual link, furthermore comprises an ID of the MAC address of the switch;
   - the switching module transmits any frame received on the predetermined virtual link to the network interface of the switch;
   - the frame received on the predetermined virtual link is transmitted to an application, DDA, hosted by the switch to locally store at least part of the data of this frame,

   **characterized in that** the data acquisition application is adapted to receive a data acquisition request from a remote server, the request giving at least one virtual link for which data are to be acquired, said application updating the switching table by adding for this virtual link, the ID of the MAC address of the switch.

2. Frame switch according to Claim 1, **characterized in that** said data acquisition application locally stores at least said part of the frame data with an ID of the predetermined virtual link to which the frame belongs.

3. Frame switch according to Claim 1, **characterized in that** said data acquisition application recovers, from an ID of the predetermined virtual link, from an IP address, from a UDP port and from a segment ID in a UDP packet, said part of the frame data, and stores said part of the frame data locally, with said ID of the predetermined virtual link, said IP address, said UDP port and said segment ID.

4. Frame switch according to Claim 2 or 3, **characterized in that** said data acquisition application compresses said part of the frame data before storing it locally.

5. Frame switch according to Claim 1, **characterized in that** said data acquisition request furthermore comprises an IP address, a UDP port and a segment ID in a UDP packet.

6. Frame switch according to Claim 1, **characterized in that** the data acquisition application is adapted to receive a data transfer request from a remote server, the request comprising at least one virtual link ID whose data are to be transferred, said application transferring said data in Ethernet frames via an applicative gateway hosted by the switch.

7. Frame switch according to Claim 1, **characterized in that** the data acquisition application is adapted to receive a data transfer request from a remote server, the request comprising at least one virtual link ID whose data are to be transferred, said application transferring said data in AFDX frames via a virtual link linking the frame switch to said remote server.

8. Deterministic full-duplex switched Ethernet AFDX network comprising at least one frame switch according to one of the preceding claims.

9. AFDX network according to Claim 8, **characterized in that** it furthermore comprises a server subscribed to said network, the server being adapted to transmit at least one data acquisition request to each switch of said plurality, a data acquisition request being parameterized by at least one virtual link ID passing through said switch.

10. AFDX network according to Claim 9, **characterized in that** said data acquisition request is furthermore parameterized by an IP address, a UDP port and a segment in a UDP packet.

11. AFDX network according to Claim 8, **characterized in that** it furthermore comprises a server subscribed to said network, the server being adapted to transmit data transfer requests to each switch of said plurality, a data transfer request being parameterized by at least one virtual link ID whose data are to be transferred.

12. AFDX network according to Claim 11, **characterized in that** said data transfer request is furthermore parameterized by an IP address, a UDP port and a segment ID in a UDP packet.

13. Aircraft **characterized in that** it comprises an AFDX network according to one of Claims 9 to 12.

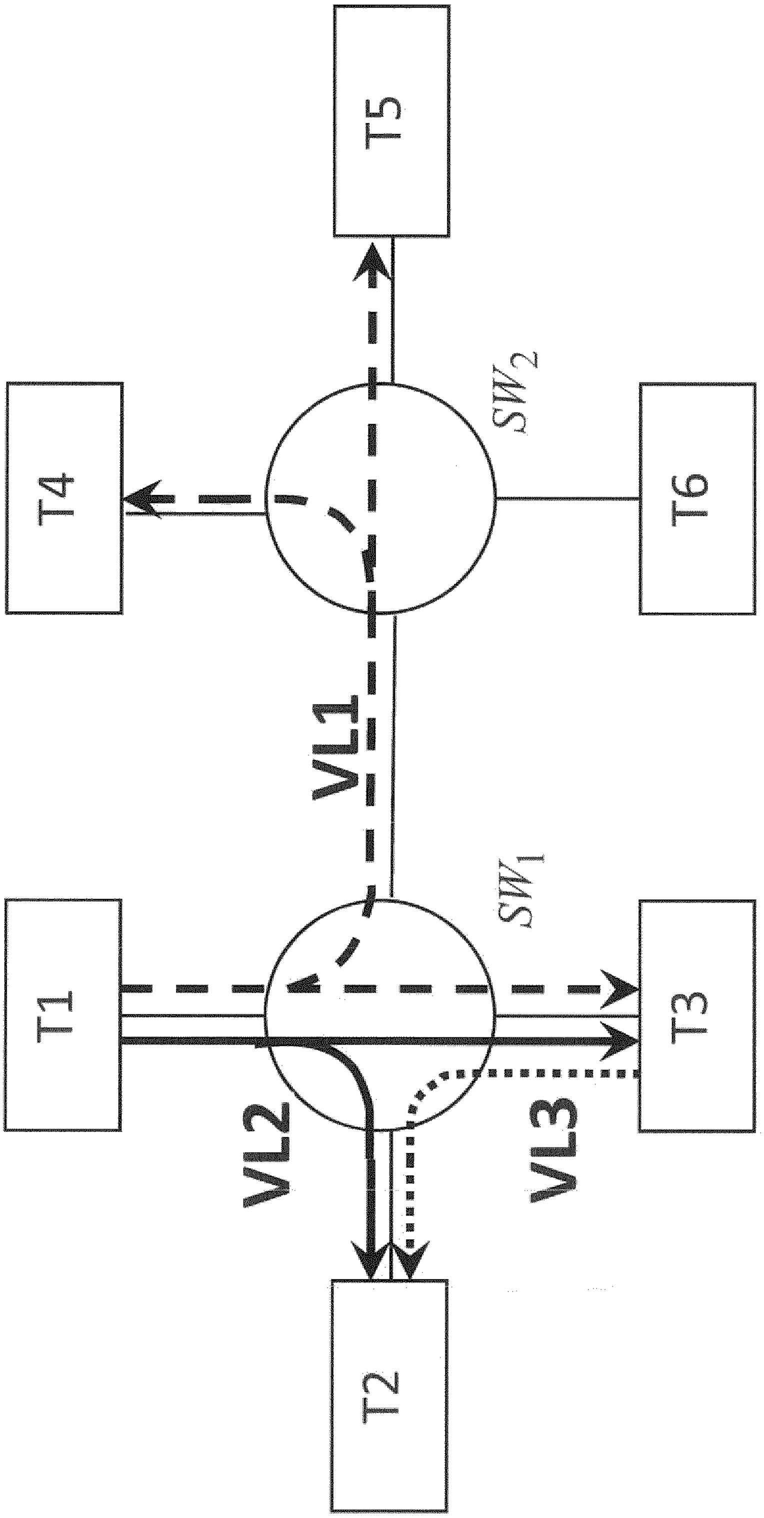


Fig. 1

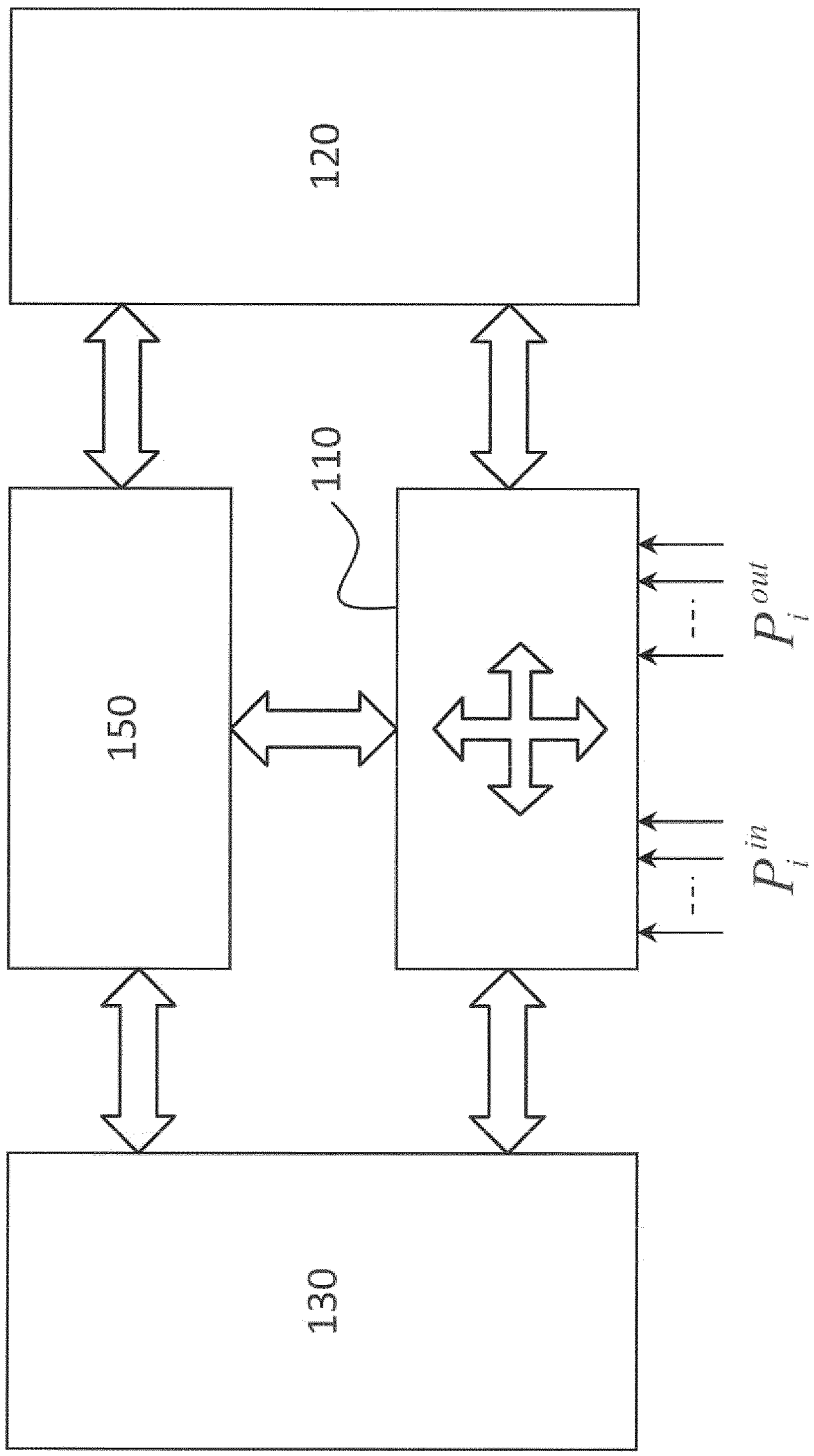


Fig. 2

Fig. 3

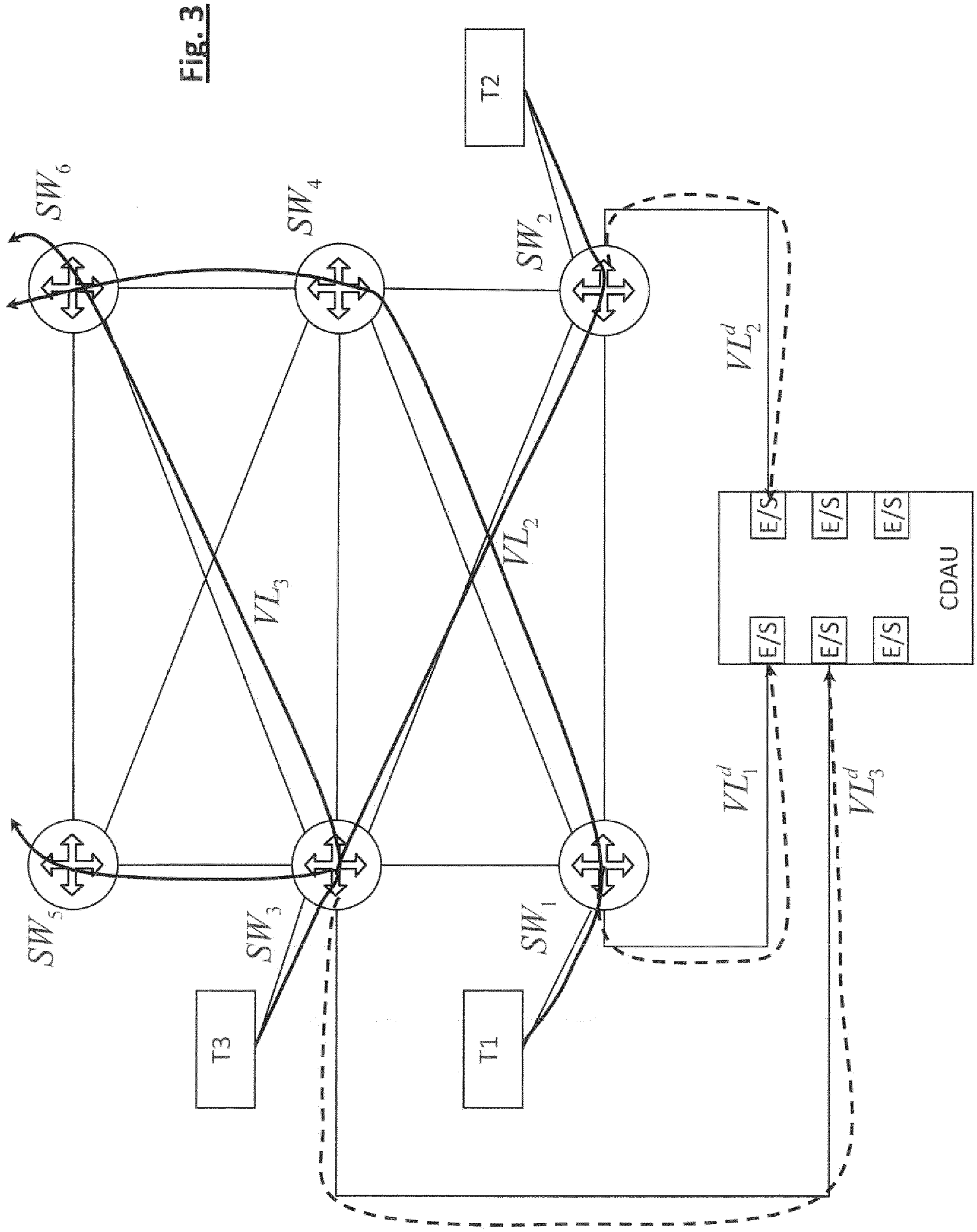
$SW_6$
$SW_4$
$SW_2$
$SW_5$
$SW_3$
$SW_1$
T2
T3
T1
$VL_3$
$VL_2$
$VL_2^d$
$VL_1^d$
$VL_3^d$
E/S
E/S
E/S
E/S
E/S
E/S
CDAU

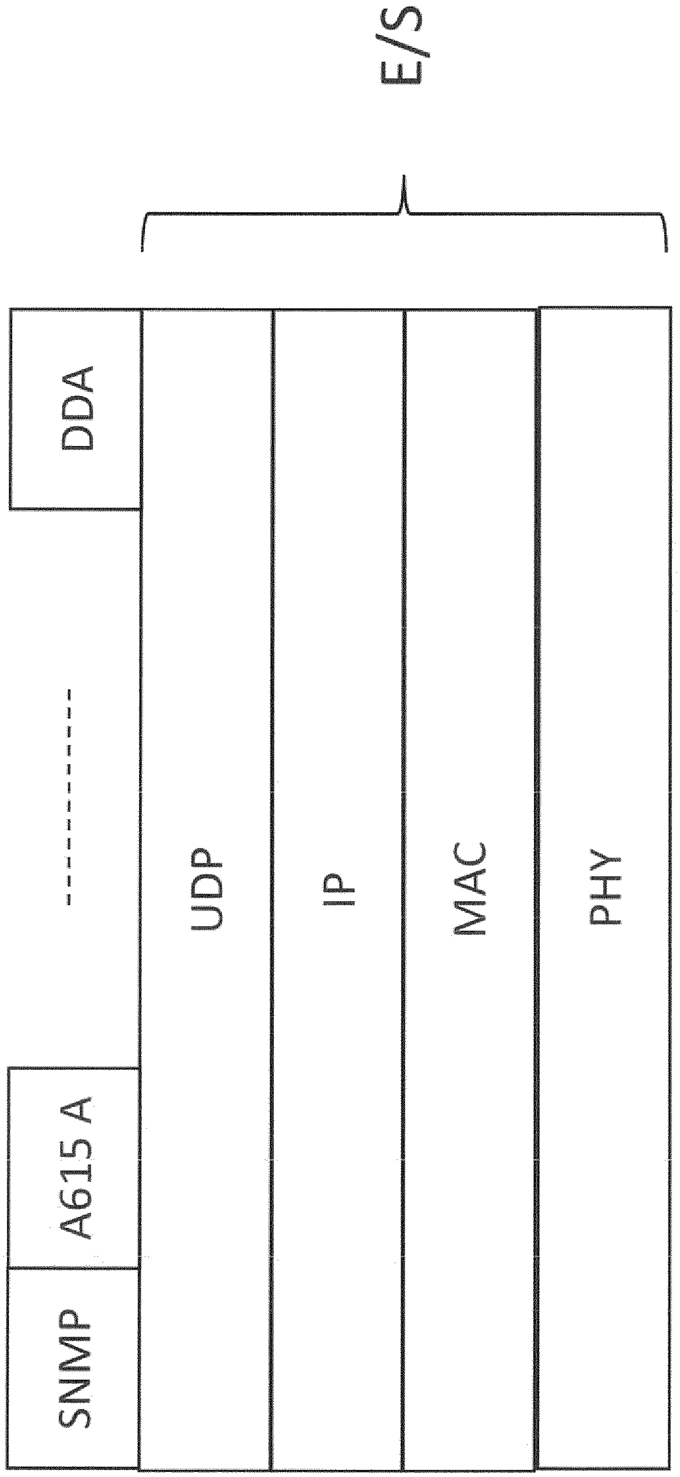


Fig. 4

| | No. VL_id | Input port | Output port(s) | Data acquisition |
|---|---|---|---|---|
| $VLS^{na}$ | $VL_1^{na}_Id$ | $P^{in}(VL_1^{na})$ | $P^{out}(VL_1^{na})$ | — |
| | ⋮ | ⋮ | ⋮ | ⋮ |
| | $VL_P^{na}_Id$ | $P^{in}(VL_P^{na})$ | $P^{out}(VL_1^{na})$ | — |
| $VLS^{a}$ | $VL_1^{a}_Id$ | $P^{in}(VL_1^{a})$ | $P^{out}(VL_1^{a})$ | $Id(E/S)$ |
| | ⋮ | ⋮ | ⋮ | ⋮ |
| | $VL_N^{a}_Id$ | $P^{in}(VL_N^{a})$ | $P^{out}(VL_N^{a})$ | $Id(E/S)$ |

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2832011 A
- US 2008043768 A1
- US 2008165705 A1